(19) **Europäisches Patentamt**
**European Patent Office**
**Office européen des brevets**

(11) **EP 1 212 222 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **00958482.2**

(22) Anmeldetag: **22.08.2000**

(51) Int Cl.:
***B60T 7/12*** (2006.01)    ***B60T 8/24*** (2006.01)

(86) Internationale Anmeldenummer:
**PCT/EP2000/008159**

(87) Internationale Veröffentlichungsnummer:
**WO 2001/014186 (01.03.2001 Gazette 2001/09)**

(54) **VERFAHREN UND VORRICHTUNG ZUM UNTERSTÜTZEN EINER HDC-REGELUNG WÄHREND DES ANFAHRENS UND/ODER FAHRENS EINES FAHRZEUGS BERGABWÄRTS**

METHOD AND DEVICE FOR SUPPORTING AN HDC DURING STARTING AND/OR DRIVING A VEHICLE IN THE DOWNHILL DIRECTION

PROCEDE ET DISPOSITIF D'ASSISTANCE D'UN REGLAGE HDC LORS DU DEMARRAGE ET/OU DU DEPLACEMENT D'UN VEHICULE EN DESCENTE

(84) Benannte Vertragsstaaten:
**DE GB**

(30) Priorität: **24.08.1999 DE 19939877**
**12.08.2000 DE 10039458**

(43) Veröffentlichungstag der Anmeldung:
**12.06.2002 Patentblatt 2002/24**

(73) Patentinhaber: **Continental Teves AG & Co. oHG**
**60488 Frankfurt am Main (DE)**

(72) Erfinder:
• **FÜHRER, Jochen**
**D-64287 Darmstadt (DE)**
• **BAITER, Ulrich**
**D-60489 Frankfurt (DE)**

(56) Entgegenhaltungen:
**EP-A- 0 992 412    WO-A-96/11826**
**DE-A- 19 648 559**

**Beschreibung**

Die Erfindung betrifft ein Verfahren und eine Vorrichtung zum Unterstützen einer HDC-Regelung (HDC= Hill Descent Control) während des Anfahrens und/oder Fahrens eines Fahrzeugs bergabwärts welche die Fahrzeuggeschwindigkeit bei einer Bergfahrt durch Beeinflussung der Betriebsbremse konstant hält oder begrenzt und in Abhängigkeit von mindestens einer externen, das Fahrzeug antreibenden Größe die Regelung modifiziert.

Beim Anfahren eines Fahrzeugs am Berg ändern sich die Motorbetriebsbedingungen unter anderem dahingehend, dass der Motor übergeht vom Leerlaufverhalten (unbelasteter Lauf) hin zum Normalbetrieb (belasteter Lauf), indem der Motor das Fahrzeug antreibt, so dass die Motorausgangsleistung größtenteils und insbesondere definiert zum Antreiben des Fahrzeugs verwendet wird. Wenn das Fahrzeug bergabwärts fährt, ist die Geschwindigkeit von der Stellung des Gaspedals, dem eingelegten Gang, dem Motorschleppmoment und dem Gefälle (Fahrbahnneigung) abhängig. Bei steilen Gefällestrecken ist das Motorschleppmoment oftmals nicht ausreichend, um eine kontrollierte Abfahrt zu gestatten. Es sind daher bereits Einrichtungen bekannt, durch welche das Fahrzeug auf einer Gefällestrecke durch ein automatisches Betätigen der Bremsen auf einer konstanten, vom Fahrer gewünschten Geschwindigkeit gehalten werden können. Derartige Fahrzeuge sind in der Regel mit einem Antiblockiersystem (ABS) sowie mit einer Antriebsschlupfregelung (ASR) ausgerüstet. Die dadurch bereits vorhandenen Baugruppen wie Elektronik, Raddrehzahlsensoren, Längsbeschleunigungssensoren, Magnetregelventile, Motor-Pumpen-Aggregate usw. werden mitbenutzt, um die o.g. Geschwindigkeitsregelung durchzuführen. Durch die bekannten Baugruppen wird der Fahrer auf Gefällestrecken davon entlastet, ständig das Bremspedal betätigen zu müssen. Dabei wird auch bei unterschiedlichen Fahrbahnneigungen eine gleichmäßige Geschwindigkeit eingehalten.

Aus der WO 96/11826 A1 ist es bekannt, ein Fahrzeug mit einer sogenannten Berg-Abfahrts-Regelung auszustatten (auch bezeichnet als HDC = Hill Descent Control). Diese Regelungsart kann vom Fahrer durch einen Schalter eingeschaltet werden. Die o.g. Regelung ist in der Lage, durch eine aktive, fahrerunabhängig geregelte Bremsung das Fahrzeug auf einer steilen Gefällestrecke auf einer konstanten, niedrigen Geschwindigkeit zu halten, ohne dass der Fahrer die Bremsen zu betätigen braucht. Hierzu wird die Beschleunigung in Fahrzeuglängsrichtung mit einem vorgegenen Schwellenwert verglichen und die Betriebsbremse in Abhängigkeit von dem Vergleichsergebnis beeinflusst. Dieses System ist besonders für Geländefahrzeuge vorgesehen, die auf einem Gefälle fahren, bei dem das Motorschleppmoment auch im niedrigsten Gang nicht mehr ausreicht um das Fahrzeug zu verzögern.

Die Regelparameter des vorstehend beschriebenen HDC-Reglers müssen dabei in verschiedenen Fahrsituationen und bei verschieden steilen Fahrbahnneigungen eine komfortable HDC-Regelung ermöglichen. Sie stellen daher einen Kompromiß an die verschiedenen Fahrsituationen und Steigungswinkel der Gefällestrecken dar. Beim Anfahren auf einer sehr steilen Gefällestrecke kommt es daher zu einem großen Überschwingen über die Sollgeschwindigkeit und zu großen Fahrzeugbeschleunigungen bis zum Erreichen der HDCgeregelten Sollgeschwindigkeit. Dies ist vor allem dann der Fall, wenn die Bremse abrupt gelöst wird und der Fahrer das Fahrzeug so dem HDC-Regler überläßt. Eine hohe Fahrzeugbeschleunigung auf einer steilen Gefällestrecke vermittelt dem Fahrer ein sehr unsicheres Gefühl und wenig Vertrauen in den HDC-Regler. Hinzu kommt, dass die Raddrehzahlsensoren erst ab einer gewissen Mindestgeschwindigkeit ein Signal abgeben und sich die aus diesem Signal abgeleiteten HDC-Regelgrößen Geschwindigkeit und Beschleunigung des Fahrzeugs erst einschwingen müssen.

Neben den oben geschilderten Problemen bezüglich des Anfahrens bergabwärts, ergeben sich aufgrund der nicht an die spezielle Fahrsituation bzw. die spezielle Fahrbahnneigung angepaßten Regelparameter des HDC-Reglers ähnliche Überschwingzustände über die Sollgeschwindigkeit und große Fahrzeugbeschleunigungen bis zum Regelbeginn des HDC-Reglers auch bei plötzlichen Gefälleänderungen, etwa weil das Fahrzeug über eine Kuppe rollt.

Der Erfindung liegt die Aufgabe zugrunde, ein Verfahren und eine Vorrichtung der eingangs genannten Art anzugeben, mittels denen ein Fahrzeug mit HDC-Regelung beim Anfahren und Fahren bergabwärts komfortabler geregelt werden kann.

Diese Aufgabe wird erfindungsgemäß mit den Merkmalen der unabhängigen Ansprüche gelöst. Abhängige Ansprüche sind auf bevorzugte Ausführungsformen der Erfindung gerichtet.

Erfindungsgemäß sieht das gattungsgemäße Verfahren vor, mindestens eine externe, das Fahrzeug antreibende Größe zu ermitteln, diese, das Fahrzeug antreibende Größe und/oder deren Veränderung, mit mindestens einem vorgegebenen Schwellenwert zu vergleichen und in Abhängigkeit von dem Vergleichsergebnis die Betriebsbremse vor oder nach dem Eintritt in die HDC-Regelung zu beeinflussen.

Hierdurch ist eine gezielte Verringerung der Fahrzeuggeschwindigkeit beim Anfahren bergabwärts oder beim Wechsel der Fahrbahnneigung (Steigung/Gefälle) vor oder nach Regelungseintritt des HDC-Reglers möglich. Dadurch wird in Abhängigkeit von bestimmten Größen bereits vor oder während dem Anfahren bzw. Anrollen ein Bremsdruck in den Betriebsbremsen aufgebaut, der im Teilbremsbereich dafür sorgt, dass die Beschleunigung und die Geschwindigkeit des Fahrzeugs reduziert wird, wenn die Bremse abrupt gelöst wird und der Fahrer das Fahrzeug so dem HDC-Regler überläßt. Eine verringerte Fahrzeugbeschleunigung und - geschwindigkeit bei einer steilen Fahrbahnneigung vermittelt dem Fahrer ein sehr sicheres Gefühl und Vertrauen in den HDC-Regler. Hinzu kommt, dass sich die Sollgeschwindigkeit des HDC-Reglers ohne größeres Überschwingen einstellt.

Gegenstand der Erfindung ist ferner, eine gattungsgemäße Vorrichtung so auszugestalten, dass eine Ermittlungseinheit eine externe, das Fahrzeug antreibende Größe ermittelt, dass eine Vergleichseinheit die antreibende Größe und/oder deren Veränderung, mit mindestens einem vorgegebenen Schwellenwert vergleicht und dass eine Einheit die Betriebsbremse in Abhängigkeit von dem Vergleichsergebnis beeinflußt.

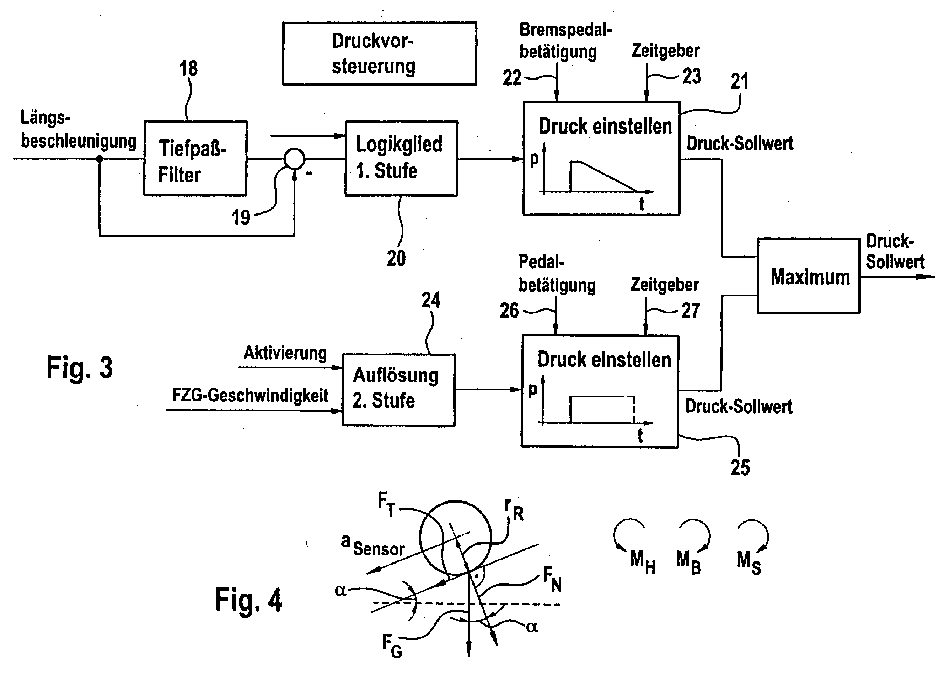

Als externe Größe wird die Erdbeschleunigungskomponente in Fahrzeuglängsrichtung im Stillstand des Fahrzeugs mittels eines Längsbeschleunigungssensors $a_{sensor}$ erfaßt. Dabei gelten in erster Näherung die in Fig. 4 schematisch dargestellten Gesetzmäßigkeiten. Die Gewichtskraft $F_G$ des Fahrzeugs kann in eine Normalkomponente $F_N$ und eine Tangentialkompenente $F_T$ am Reifen eines Einradmodells zerlegt werden. $F_T$ wird zusammen mit dem Reifenradius $r_R$ zu einem Hangabtriebsmoment $M_H$ gemäß der Formel $M_H = F_G * \sin\alpha * r_R$.

Hierbei ist $\alpha$ der Winkel der Fahrbahnneigung. Das Hangabtriebsmoment würde ohne weitere Einflußmaßnahmen dazu führen, dass das Fahrzeug bergab rollt. Ihm entgegen wirken das haltende Bremsmoment und das beim Anfahren zusätzlich eingebrachte Motorschleppmoment $M_S$. Die erfindungsgemäß vorgesehene Vorrichtung zum Unterstützen einer HDC-Regelung am Berg kann beispielsweise das Bremsmoment beeinflussen. Bereits im Stillstand des Fahrzeugs erfasst der vorgesehene Längsbeschleunigungssensor $a_{Sensor}$ die Erdbeschleunigungskomponente in Fahrzeuglängsrichtung, die ein direktes Maß für die geschätzte Fahrbahnneigung $\sin\alpha = \dfrac{a_{Sensor}}{g}$ ist. Beim Anfahren, das heißt, wenn das Fahrzeug nach dem Lösen der Bremse aus dem Stillstand ohne ein zusätzliches Motormoment auf Grund des Hangabtriebsmoments beschleunigt, wird die von dem Längsbeschleunigungssensor erfasste Erdbeschleunigungskomoomente in Fahrzeuglängsrichtung jedoch von der Fahrzeuglängsbeschleunigung verfälscht. Da noch keine gesicherten Radsignale der Radsensoren vorliegen, wird daher der Sillstandswert beibehalten, bis eine gewisse Mindestgeschwindigkeit erreicht ist. Mit dem Erreichen dieser Mindestgeschwindigkeit wird die Fahrbahnneigung aus den Signalen des Längsbeschleunigungssensors und mindestens eines Radsensors nach $a_{Rad} = \dfrac{dv}{dt}$ oder

$$a_{Rad} = \dfrac{d\omega}{dt} * r$$ mit v = Raddrehzahl, $\omega$ = Winkelgeschwindigkeit, r = Radradius, bestimmt.

Aus den ermittelten Beschleunigungswerten $a_{sensor}$ und $a_{Rad}$ wird nach vorzeichenrichtiger Summation die externe Größe als Anteil der Erdbeschleunigung i Fahrzeuglängsrichtung wie folgt bestimmt:

$a_{Sensor}$ = gemessener Anteil der Erdbeschleunigung bei Fahrzeugstillstand bzw nahezu Fahrzeugstillstand
$a_{Sensor} - a_{Rad}$ = ermittelter Anteil der Erdbeschleunigung in Vorwärtsfahrt (eingelegter 1ter Gang)
$a_{Sensor} + a_{Rad}$ = ermittelter Anteil der Erdbeschleunigung in Rückwärtsfahrt (eingelegter Rückwärtsgang)

Die Erdbeschleunigungskompomente oder davon abgeleitete Größen, können einzeln oder in Kombination zur Schätzung oder Ermittlung der externen Größe nach den Beziehungen

$$\sin\alpha = \dfrac{a_{Sensor}}{g}$$ bei nahezu Fahrzeugstillstand

$$\sin\alpha = \dfrac{a_{Sensor} - a_{Rad}}{g}$$ bei Rückwärtafahrt

$$\sin\alpha = \dfrac{a_{Sensor} + a_{Rad}}{g}$$ bei Vorwärtsfahrt

herangezogen werden. Externe Größen sind das Gefälle bzw. die Fahrzeug- oder Fahrbahnneigung, der Hangabtrieb, das Hangabtriebsmoments oder die Hangabtriebskraft und dergleichen.

Zum Regeln der Fahrzeuggeschwindigkeit ist es zweckmäßig, die im Stillstand des Fahrzeugs ermittelte Fahrbahnneigung $\sin\alpha = \dfrac{a_{Sensor}}{g}$ beim Anfahren bzw. Anrollen des Fahrzeugs in Fahrzeuglängsrichtung bis zu einer Fahrzeuggeschwindigkeit, bei der verwertbare Radsignale vorliegen, vorzugsweise einer Fahrzeuggeschwindigkeit bis zu maximal 3km/h, festzuhalten. Das Anfahren oder Anrollen wird dadurch erkannt, dass aus den gefilterten und ungefilterten Signalen des Längsbeschleunigungssensors die Differenz gebildet und nach den folgenden Beziehungen fahrtrichtungsabhängig mit Schwellenwerten verglichen wird:

$$a_{SensorFilter} - a_{Sensor} \geq S_{aDifferenz/R} \quad (\text{Rückwärtsfahrt}, \; a_{SensorFilter} > 0)$$

$$a_{SensorFilter} - a_{Sensor} \leq -S_{aDifferenz/V} \quad (\text{Vorwärtsfahrt}, \; a_{SensorFilter} < 0)$$

mit $S_{aDifferenz/R/V}$ = Schwellenwert, $a_{SensorFilter}$ = tiefpassgefilterte Beschleunigung des Fahrzeugs, $a_{Sensor}$ = gemessene Beschleunigung des Fahrzeugs (Signal des Längsbeschleunigungssensors). Ist bei einem ersten Auslösezeitpunkt, das Vergleichsergebnis

$\sin\alpha \geq S_{1/R}$ (Rückwärtsfahrt) oder

$\sin\alpha \leq -S_{1/V}$ (Vorwärtsfahrt)

mit $S_{1/R/V}$ = erster Schwellenwert der Fahrbahnneigung, $\sin\alpha$ = geschätzte Fahrbahnneigung, das heißt, ist die auf der Basis der gemessenen Erdbeschleunigung geschätzte Fahrbahnneigung großer als ein erster vorgegebener Schwellenwert und ist

$$a_{SensorFilter} - a_{Sensor} \geq S_{aDifferenz/R} \quad (\text{Rückwärtsfahrt}, \; a_{SensorFilter} > 0)$$

$$a_{SensorFilter} - a_{Sensor} \leq -S_{aDifferenz/V} \quad (\text{Vorwärtsfahrt}, \; a_{SensorFilter} < 0)$$

das heißt, ist die Differenz aus der tiefpassgefilterten und der ungefilterten Beschleunigung bei einer Fahrt rückwärts größer bzw. bei einer Fahrt vorwärts kleiner als ein vorgegebener Schwellenwert, wird die Betriebsbremse mit einem Bremsfluid vorbefüllt oder ein in der Betriebsbremse vorhandenes Bremsfluid eingestellt oder modifiziert. Die Betriebsbremse wird auf mindestens einen konstanten Bremsdruck, vorzugsweise zwischen 1 und 6 bar, mit dem Bremsfluid vorbefüllt oder, falls der Fahrer zum Zeitpunkt des Anfahrens oder Anrollens noch die Betriebsbremse betätigt, ein in der Betriebsbremse vorhandenes Bremsfluid auf den konstanten Bremsdruck eingestellt. Der konstante Bremsdruck wird vorzugsweise in Abhängigkeit von einem Bremsenbetätigungssignal so variiert, dass bei einer Bremsenbetätigung der Bremsdruck geringer ist als ohne Bremsenbetätigung. Betätigt der Fahrer noch die Betriebsbremse, werden nur die Trennventile geschlossen, um einen weiteren Bremsdruckabbau durch das Lösen der Bremse zu verhindern. Das in der Betriebsbremse vorhandene Bremsfluid wird unmittelbar danach auf den konstanten Bremsdruck eingestellt.

Nach einem Ausführungsbeispiel der Erfindung, wird die Betriebsbremse mit einem variablen Bremsdruck, vorzugsweise in Abhängigkeit von der Fahrbahnneigung, dem Rollwiderstand und/oder einem in die Betriebsbremse eingesteuerten Bremsdruck, mit einem Bremsfluid vorbefüllt oder ein in der Betriebsbremse vorhandenes Bremsfluid, auf den variablen Bremsdruck eingestellt.

Bei einem sehr langsamen Anfahr- oder Anrollvorgang, bei dem der Fahrer die Bremse nur sehr langsam löst, wird die Differenz des gefilterten und ungefilterten Signals den Schwellenwert nicht erreichen. Eine Bremsdruckvorsteuerung ist in diesem Fall nicht erwünscht und wird auch nicht eingeleitet.

An dem ersten Auslösezeitpunkt wird ein Zähler oder Zeitglied gestartet. Wenn der Zählerstand einen bestimmten Wert erreicht hat bzw. nach einer vorgegebenen Zeit, wird ermittelt, ob der Eintritt in die HDC-Regelung erfolgt ist. Ist der Eintritt in die HDC-Regelung noch nicht erfolgt und/oder ist eine geringe Fahrzeuggeschwindigkeit, vorzugsweise eine Fahrzeuggeschwindigkeit $v_{Fahrzeug}$ zwischen 1km/h und 3km/h, noch nicht erreicht, erfolgt ein Abbau des Bremsdrucks.

Bei hohem Rollwiderstand, etwa durch Schnee oder Schlamm auf der Fahrbahn, kann sich der konstant vorgegebene Bremsdruck als zu hoch erweisen. Das Fahrzeug wird nur kurz anrucken und dann wieder stehen bleiben. Durch das vorgesehene langsame reduzieren des Bremsdrucks rollt das Fahrzeug sicher an.

Zur weiteren Verbesserung des Verfahrens nach der Erfindung, wird bei einem zweiten Auslösezeitpunkt, bei dem das Vergleichsergebnis von

$$\sin \alpha = \frac{a_{Sensor} - a_{Rad}}{g} \geq S_{2/R} \qquad \text{bei Rückwärtafahrt}$$

$$\sin \alpha = \frac{a_{Sensor} + a_{Rad}}{g} \leq -S_{2/V} \qquad \text{bei Vorwärtsfahrt}$$

mit $S_{2R/V}$= zweiter Schwellenwert der Fahrbahnneigung bei Vorwärts- bzw. Rückwärtsfahrt, sin $\alpha$ = geschätzte Fahrbahnneigung, ist, und bei dem eine geringe Fahrzeuggeschwindigkeit, vorzugsweise eine Fahrzeuggeschwindigkeit $V_{Fahrzeug}$ zwischen 1km/h und 3km/h, erreicht ist bzw. bei dem verwertbare Radsingnale vorliegen, in der Betriebsbremse ein Bremsdruckaufbau auf mindestens einen Bremsdruckwert durchgeführt. Der Bremsdruckwert wird in Abhängigkeit von einem Bremsenbetätigungssignal und/oder der Fahrbahnneigung eingestellt. Der Wert des zweiten schwellenwertes. $S_{2/R/V}$ (der Fahrbahnneigung) liegt unter dem Schwellenwert $S_{1/R/V}$ für das Vergleichsergebnis an dem ersten Auslösezeitpunkt, da bei geringerer Fahrbahnneigung es ausreicht, wenn erst bei einer geringen Fahrzeuggeschwindigkeit, z.B. bei 2 km/h, Bremsdruck in die Radbremse eingesteuert wird. Der eingestellte Bremsdruck am zweiten Auslösezeitpunkt wird erhöht, falls am ersten Auslösezeitpunkt die Betriebsbremse mit einem Bremsfluid vorbefüllt oder ein in der Betriebsbremse vorhandenes Bremsfluid eingestellt bzw. modifiziert wurde oder es wird am zweiten Auslösezeitpunkt erstmalig ein Bremsdruck eingestellt, falls am ersten Auslösezeitpunkt die Betriebsbremse nicht mit einem Bremsfluid vorbefüllt oder kein in der Betriebsbremse vorhandenes Bremsfluid modifiziert wurde.

Nach einem weiteren Ausführungsbeispiel der Erfindung, wird der Bremsdruckwert in Abhängigkeit von der Fahrbahnneigung kontinuierlich verändert.

An dem zweiten Auslösezeitpunkt wird ein Zähler oder Zeitglied gestartet. Erreicht der Zählerstand einen bestimmten Wert bzw. ist eine bestimmte Zeit vergangen und der Eintritt in die HDC-Regelung noch nicht erfolgt, erfolgt ein Abbau des Bremsdrucks.

Erreicht der HDC-Regler seine Eintrittsschwelle bevor der Wert des Zählers erreicht ist, kann er vor Ablauf der Zeit den Bremsdruck weiter erhöhen.

Nach einer weiteren Ausführungsvariante des Verfahrens wird beim Lösen des Bremspedals der Bremsdruck mittels eines Drucksensors erfaßt und mit einem in Abhängigkeit von der Fahrzeugneigung berechneten Übernahmedruck korreliert. Erreicht der Bremsdruck beim Betätigen (Lösen) des Bremspedals diesen Übernahmedruck, so werden die bekannten Trennventile einer Bremsanlage geschlossen und der HDC-Regler übernimmt die Regelung.

Die Erfindung sieht weiterhin eine Gefällekompensation vor, in der zu den normalen Druckaufbauten in der Betriebsbremse durch den HDC-Regler Druckerhöhungen addiert werden. Dabei wird bei einem Vergleichsergebnis von

$$\sin \alpha = (a_{Sensor} - a_{Rad})/g \leq S_{3/V} \text{ (negativer Zahlenwert)}$$

oder

$$\sin \alpha = (a_{Sensor} + a_{Rad})/g \geq S_{3/R} \text{ (positiver Zahlenwert)}$$

mit $S_{3/V/R}$= erster Schwellenwert der Fahrbahnneigung bei Vorwärts- oder Rückwärtsfahrt, $a_{Sensor}$= Längsbeschleunigung des Fahrzeugs bei $V_{Fahrzeug} \geq 1$ km/h, $a_{Rad}$ = Radbeschleunigung, sin $\alpha$ = geschätzte Fahrbahnneigung (Sinus des Steigungswinkels $\alpha$), g = Erdbeschleunigung, zu dem vom der HDC-Regelung ermittelten Bremsdruck des Bremsfluids ein von der Fahrbahnneigung abhängiger Kompensationsbremsdruck addiert. Bei sin $\alpha > 0$ erfolgt eine Fahrt bergauf in Fahrzeuglängsrichtung (relevant für eine Rückwärtsfahrt), bei sin $\alpha < 0$ erfolgt eine Fahrt bergab in Fahrzeuglängsrichtung (relevant für eine Vorwärtsfahrt). Zweckmäßiger Weise wird der Kompensationsbremsdruck in Abhängigkeit von einem zur Kompensation des Hangabtriebs bestimmten Grenzbremsdruck zu dem HDC-Bremsdruck addiert, bis die Summe aus dem HDC-Bremsdruck und dem Kompensationsbremsdruck den zur Kompensation des Hangabtriebs bestimmten Grenzbremsdruck erreicht. Darüber hinaus wird der Kompensationsbremsdruck auch nach Maßgabe der Istbeschleunigung so lange zu dem HDC-Bremsdruck addiert, bis eine Abnahme der Istbeschleunigung des Fahrzeugs ermittelt wird. Der Grenzbremsdruck wird nach den folgenden Beziehungen ermittelt:

$$P_{compV} = \sin \alpha \ * \ K_{V/1} \ (K<0) \ \text{vorwärts}$$

oder

$$P_{compR} = \sin \alpha \ * \ K_{R/1} \ (K>0) \ \text{rückwärts}$$

mit $P_{compV}$ = Grenzbremsdruck bei Vorwärtsfahrt, $P_{compR}$ = Grenzbremsdruck bei Rückwärtsfahrt, $\sin \alpha$ = Fahrbahn-neigung, $K_{V/R/1}$ = Bremsdruckkonstante. Der Wert der Bremsdruckkonstanten $K_{1/V/R}$, z.B. 100bar, wird erhöht, wenn ein vierter Schwellenwert der Fahrbahnneigung $S_{V/R/4}$, der eine bis zu dem Faktor 5 größere Fahrbahnneigung wiedergibt, überschritten ist.

Die Grösse der Schwellenwerte $S_{V/R}$ wird nach Maßgabe der Fahrrichtung "VORWÄRTS" oder "RÜCKWÄRTS" bestimmt.

Die Differenz zwischen dem aktuellen Bremsdruck des HDC-Reglers und dem von der Gefällekompensation 14 ermittelten Kompensationsbremsdruck wird in jeder Druckstufe anteilsmäßig durch Druckerhöhung kompensiert. Der Kompensationsbremsdruck wird nach der folgenden Beziehung ermittelt:

$$P_{addcomp} = K_2 \ * \ (P_{comp} - P_{sollold}),$$

mit $P_{addcomp}$ = Kompensationsbremsdruck, $K_2$ = Anteilsfaktor des Grenzbremsdrucks $P_{comp}$, $P_{sollold}$ = HDC-Bremsdruck vor der aktuellen Druckerhöhung $P_{soll}$.

Wesentlich für die Kompensationsbremsdruckberechnung ist dabei der Wert $P_{sollold}$ vor der aktuellen Druck-erhöhung $P_{soll}$. Nach einem weiteren Ausführungsbeispiel wird die von dem HDC-Regler ermittelte Druckerhöhung mindestens verdoppelt ($2* (P_{soll}-P_{sollold})$).

Die Erhöhung des von der HDC-Regelung vor der aktuellen Druckerhöhung ermittelten Bremsdruckes $P_{sollold}$ um einen Kompensationsbremsdruck nach Maßgabe der Fahrbahnneigung erfolgt daher nach der folgenden Beziehung:

$$P_{addcomp} = MAX[(0; \ K_2 \ * \ (P_{comp} - P_{sollold})); 2* \ (p_{soll}-P_{sollold})]$$

Bei starker Zunahme der Fahrbahnneigung nach den Beziehungen

$$d(\sin \alpha)/dt \geq S_{5R} \ (S>o) \ \text{bei Rückwärtsfahrt}$$

$$d(\sin \alpha)/dt \leq S_{5V} \ (S<o) \ \text{bei Vowärtsfahrt}$$

und einem Überschreiten der Sollgeschwindigkeit der HDC-Regelung nach der Beziehung $v_{Ist} \geq v_{Soll}-K_v$, mit $v_{Ist}$ = Istgeschwindigkeit, $v_{Soll}$ = Sollgeschwindigkeit, $K_v$ = Geschwindigkeitskonstante, wird der Kompensationsbremsdruck $P_{addcomp}$ zu dem vom HDC-Regler ermittelten Bremsdruck addiert oder die Bremsdruckanforderung des HDC-Reglers erhöht, z.B.doppelte Verstärkung des Beschleunigungsreglers. Abgeschaltet wird die Kompensation, sobald die Fahrzeugbeschleunigung negativ wird, d.h. die Istgeschwindigkeit sich wieder an die Sollgeschwindigkeit annähert.

Ein Ausführungsbeispiel der Erfindung ist in der Zeichnung dargestellt und wird im folgenden näher beschrieben:

Es zeigen

Fig. 1     schematisch ein Blockschaltbild einer Vorrichtung zum Unterstützen einer HDC-Regelung

Fig. 2     schematisch ein Blockschaltbild einer Vorrichtung zum Unterstützen einer HDC-Regelung vor oder nach Regelungseintritt

Fig. 3    schematisch ein Blockschaltbild einer Vorrichtung zum Unterstützen einer HDC-Regelung vor Regelungseintritt beim Anfahren oder Anrollen

Fig.4    schematisch geltende physikalische Zusammenhänge in einer beispielhaften Anwendung

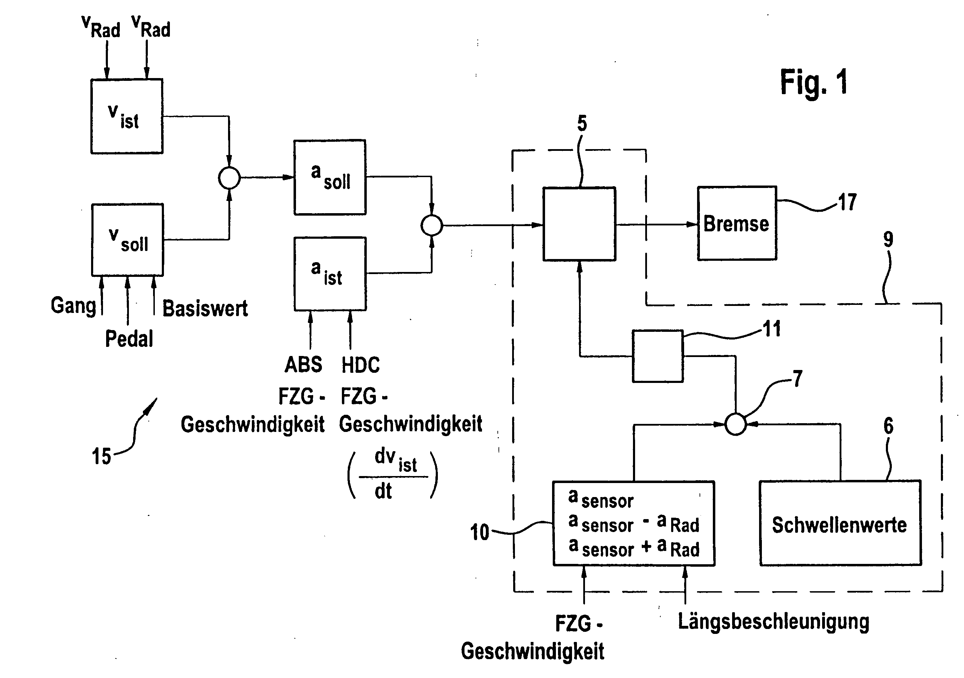

Fig. 1 zeigt schematisch ein Blockschaltbild einer Vorrichtung 9 zum Unterstützen einer HDC-Regelung während des Anfahrens oder Fahrens eines Fahrzeugs bergabwärts. Der HDC-Regeler 15, wie er in der WO 96/11862 beschrieben ist und auf die voll umfänglich verwiesen wird, hält die Fahrzeuggeschwindigkeit bei einer Bergfahrt durch Beeinflussung der Betriebsbremse 17 konstant. Die HDC-Regelung ist als Kaskade aus Geschwindigkeits- und Beschleunigungsregler aufgebaut. Der überlagerte Regelkreis ist der Geschwindigkeitsregler. Die Fahrzeugsollgeschwindigkeit $v_{soll}$ errechnet sich aus einer gang- und geländeabhängigen Basisgeschwindigkeit und einem fahrerpedalabhängigen Anteil. Als Fahrzeugistgeschwindigkeit $v_{Ist}$ wird antriebsabhängig das schnellste oder langsamste Rad betrachtet. Ausgangsgrösse der Geschwindigkeitsregelung ist die Sollbeschleunigung $a_{Soll}$. Die Istbeschleunigung $a_{Ist}$ wird aus der ABS-Fahrzeugbeschleunigung oder, bei erkanntem Radschlupf, aus der Änderung der HDC-Fahzeugistgeschwindigkeit $\frac{dv_{Ist}}{dt}$ ermittelt.

Über die Ansteuerung der Trenn- und Schaltventile einer bekannten Bremsanlage erfolgt die Beeinflussung des Bremsdrucks. Solange eine Druckanforderung vorlieg, läuft die Pumpe getaktete. Die Vorrichtung 9 weist eine Ermittlungseinheit 10 zum Ermitteln der Fahrbahnneigung (Gefälleberechnung) auf, der als Eingangsgrößen die Signale eines Längsbeschleunigungssensors und die Fahrzeuggeschwindigkeit zur Verfügung gestellt werden. Die Fahrzeuggeschwindigkeit wird dabei bevorzugt über das Radverhalten abtastende Sensoren (Raddrehzahlsensoren) in einem ABS-Regler oder von dem HDC-Regler 15 nach der Beziehung $\frac{dv_{Ist}}{dt}$ aus den Radsignalen berechnet. Die Ermittlungseinheit 10 bestimmt die Fahrbahnneigung (Gefälle)bis zum Vorliegen verwertbarer Radsignale mindestens eines Radsensors aus dem Signal $a_{sensor}$ des Längsbeschleunigungssensors (G-Sensor), beim Vorliegen von Radsignalen, aus den Signalen des Längsbeschleunigungssensors und der Fahrzeuggeschwindigkeit nach Maßgabe der Signale des Radsensors. Eine vorzeichenrichtige Summation der ermittelten Beschleunigungswerte von $a_{Sensor}$-$a_{Rad}$ oder $a_{Senso}$r+$a_{Rad}$ dient der Bestimmung der Fahrbahnneigung bei einer Fahrzeuggeschwindigkeit, bei der die verwertbaren Radsignale vorliegen. In einer Vergleienseinheit 7 wird die geschätzte Fahrbahnneigung sin $\alpha$ mit vorgegebenen Schwellenwerten 6 verglichen. Beim Erreichen oder Überschreiten der Schwellenwerte schaltet eine Ein- und Ausschaltlogik 11 eine Beeinflussungseinheit 5 aktiv oder inaktiv, die den Druckauf- oder -abbau in der Betriebsbremse 17 steuert oder modifiziert.
Die Beeinflussungseinheit 5 kann Bestandteil des HDC-Reglers 15 sein oder als separate Druckvorsteuerung 13 und/ oder Gefällekompensation 14 ausgebildet sein.

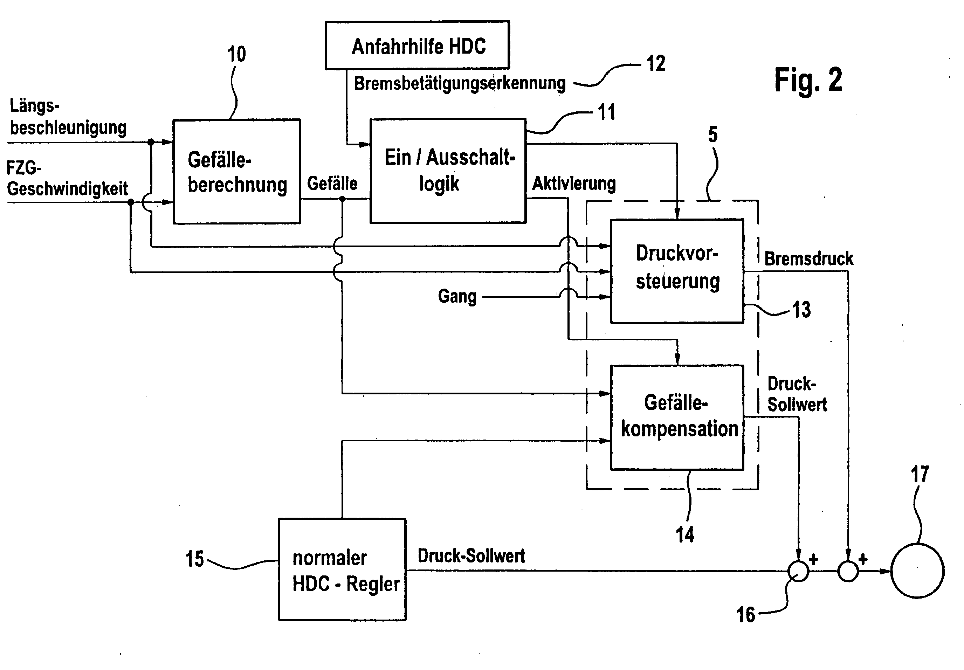

Figur 2 zeigt in schematischer Darstellung eine detailliertere Vorrichtung 9, die den HDC-Regler 15 vor und nach Eintritt in die Regelungsphase unterstützt. Die der HDC-Regelung vorgeschaltete HDC-Anfahrhilfe weist die Ermittlungseinheit 10 zur Ermittlung der Fahrbahnneigung aus den Eingangsgrößen Längsbeschleunigung und/oder Fahrzeuggeschwindigkeit auf. Die geschätzte Fahrbahnneigung (Gefälle) wird zusammen mit einer Bremsbetätigungserkennung 12 in der Ein-/Ausschaltlogik 11 bewertet. Dabei wird die Fahrbahnneigung sin $\alpha$ mit mindestens einem Schwellenwert verglichen und die Vorrichtung 14 aktiviert, wenn im Fahrzeugstillstand ( unter Fahrzeugstillstand wird hier ein Fahrzeugzustand bis zu einem von den Radsensoren sensierten Fahrzeuggeschwindigkeit ≤ 1km/h verstanden) sin $\alpha$ ≥ $S_{1/R}$ bei Rückwärtsfahrt oder sin $\alpha$ ≤ -$S_{1/V}$ bei Vorwärtsfahrt ist.
Der Regelungseintritt des HDC-Regler 15 ist zu diesem Zeitpunkt noch nicht erfolgt. Eine Aktivierung der Druckvorsteuerung 13 und/oder der Gefällekompensation 14 kann auch erfolgen, wenn bei Eintritt in die HDC-Regelung die geschätzte Fahrbahnneigung mindestens einen Schwellenwert erreicht oder überschreitet oder wenn sich während der HDC-Regelung die geschätzte Fahrbahnneigung sehr schnell ändert (z.B. d(sin$\alpha$)/dt ≥ $S_{6/R}$(z.B. $0,27\frac{1}{s}$ (Rückwärtsfahrt)oder d(sin$\alpha$)/dt ≤ -$S_{6/V}$( z.B. $-0,27\frac{1}{s}$ (Vorwärtsfahrt)) und der Schwellenwert $S_{5R/V}$ erreicht oder überschritten wird.
Die aktivierte Druckvorsteuerung 13 berechnet Bremsdrucksollwerte nach der folgenden Regelphilosophie. Figur 3 zeigt hierzu die Druckvorsteuerung 13 in schematischer Darstellung.
In der Druckvorsteuerung 13 wird die Fahrbahnneigung sin $\alpha$ fahrtrichtungsabhängig (z.B. über den eingelegten Gang)mit jeweils mindestens einem Schwellenwert nach der Beziehung $\sin\alpha \geq S_{1/R}$ oder $\sin\alpha \leq S_{1/V}$ verglichen und ein erstes Vergleichsergebnis nach Maßgabe der Fahrbahnneigung ermittelt. Beim Anfahren bzw. Anrollen des Fahrzeugs in Fahrzeuglängsrichtung wird bis zum Vorliegen von verwertbaren Radsignalen (bis einer Fahrzeuggeschwindigkeit von maximal 3km/h) der Wert des Längsbeschleunigungssignals beibehalten. Das Anfahren oder Anrollen wird dadurch erkannt, dass aus den gefilterten und ungefilterten Signalen des Längsbeschleunigungssensors die Differenz gebildet und nach den folgenden Beziehungen fahrtrichtungsabhängig mit Schwellenwerten verglichen wird:

$$a_{SensorFilter} - a_{Sensor} \geq S_{aDifferenz/R} \quad (\text{Rückwärtsfahrt}, \ a_{SensorFilter} > 0)$$

$$a_{SensorFilter} - a_{Sensor} \leq S_{aDifferenz/V} \quad (\text{Vorwärtsfahrt}, \ a_{SensorFilter} < 0)$$

mit $S_{aDifferenz/R/V}$ = Schwellenwert, $a_{SensorFilter}$ = tiefpassgefilterte Beschleunigung des Fahrzeugs, $a_{Sensor}$ = gemessene Beschleunigung des Fahrzeugs (Signal des Längsbeschleunigungssensors). Sind bei einem ersten Auslösezeitpunkt die Vergleichsergebnisse

$$\sin\alpha \geq S_{1/R} \quad (\text{Rückwärtsfahrt})$$

oder

$$\sin\alpha \leq -S_{1/V} \quad (\text{Vorwärtsfahrt})$$

mit $S_{1/R/V}$ = erster Schwellenwert der Fahrbahnneigung, $\sin\alpha$ = geschätzte Fahrbahnneigung, das heißt, ist die auf der Basis der gemessenen Erdbeschleunigungskomponente geschätzte Fahrbahnneigung größer als ein erster vorgegebener Schwellenwert und ist

$$a_{SensorFilter} - a_{Sensor} \geq S_{aDifferenz/R} \quad (\text{Rückwärtsfahrt}, \ a_{SensorFilter} > 0)$$

$$a_{SensorFilter} - a_{Sensor} \leq S_{aDifferenz/V} \quad (\text{Vorwärtsfahrt}, \ a_{SensorFilter} < 0)$$

das heißt, ist die Differenz aus der tiefpassgefilterten und der ungefilterten Beschleunigung bei einer Fahrt rückwärts größer bzw. bei einer Fahrt vorwärts kleiner als ein vorgegebener Schwellenwert, liefert die Drucksteuerung 21 Bremsdruckwerte für die Radbremsen 17 nach Maßgabe eines Bremspedalbetätigungssignales 22. Die Drücke in der Betriebsbremse 17 werden durch die Schalt- und Trennventile einer bekannten Bremsanlage gesteuert. Dabei wird die Betriebsbremse auf mindestens einen konstanten Bremsdruck, vorzugsweise zwischen 1 und 6 bar, mit dem Bremsfluid vorbefüllt. Der Bremsdruck beträgt bei einer Betätigung der Betriebsbremse 17 zwischen 20 und 70% des Bremsdruckwertes ohne Betätigung der Betriebsbremse.

An dem ersten Auslösezeitpunkt, an dem die Vergleichsergebnisse $\sin\alpha \geq S_{1/R}$ (Rückwärtsfahrt) oder $\sin\alpha \leq -S_{1/V}$ (Vorwärtsfahrt) und $a_{SensorFilter} - a_{Sensor} \geq S_{aDifferenz/R}$ (Rückwärtsfahrt, $a_{SensorFilter} > 0$) bzw. $a_{SensorFilter} - a_{Sensor} \leq S_{aDifferenz/V}$ (Vorwärtsfahrt, $a_{Sensorfilter} < 0$) sind, wird ein Zähler gestartet bzw. Zeitglied ausgelöst, und wenn der Zählerstand einen bestimmten Wert erreicht hat bzw. wenn eine bestimmte Zeitdauer vergangen ist und der Eintritt in die HDC-Regelung noch nicht erfolgt ist und/oder eine geringe Fahrzeuggeschwindigkeit, vorzugsweise eine Fahrzeuggeschwindigkeit $V_{Fahrzeug}$ zwischen 1km/h und 3km/h, noch nicht erreicht ist, wird der Bremsdruck in der Betriebsbremse 17 wieder abgebaut.

Über die Eingangsgrößen Fahrbahnneigung und Fahrzeuggeschwindigkeit wird beim Eintritt in die HDC-Regelung in dem Logikglied 21 ermittelt, ob eine geringe Fahrzeuggeschwindigkeit, vorzugsweise eine Fahrzeuggeschwindigkeit $V_{Fahrzeug}$ zwischen 1km/h und 3km/h, erreicht ist, und ob ein Vergleichsergebnis von

$$\sin\alpha = \frac{a_{Sensor} - a_{Rad}}{g} \geq S_{2/R} \qquad \text{bei Rückwärtafahrt}$$

$$\sin\alpha = \frac{a_{Sensor} + a_{Rad}}{g} \leq -S_{2/V} \qquad \text{bei Vorwärtsfahrt}$$

mit $S_2$= zweiter (fahrtrichtungsabhängiger) Schwellenwert der Fahrbahnneigung, $\sin\alpha$= geschätzte Fahrbahnneigung, vorliegt. Darauf hin liefert die Drucksteuerung 25 von dem Bremsbetätigungssignal 26 abhängige konstante Bremsdruckwerte für die Betriebsbremse 17. Der zweite, von der Fahrtrichtung (Vorwärts/Rückwärts) abhängige Schwellenwert beträgt dabei 30 bis 70 % des ersten Schwellenwertes $S_1$. Die Bremsdruckwerte (Bremsdrücke) werden nach Maßgabe der Fahrbahnneigung beim Erreichen oder Überschreiten der ersten Schwellenwerte und ohne vorliegendes Bremsenbetätigungssignal auf einen über dem am ersten Auslösepunkt vorgegebenen Bremsdruck gesetzt. An dem zweiten Auslösepunkt, wenn die Fahrzeuggeschwindigkeit 3km/h $\geq$ $V_{Fahrzeug}$ $\geq$ 1km/h ist und

$$\sin\alpha = \frac{a_{Sensor} - a_{Rad}}{g} \geq S_{2/R} \text{ oder } \sin\alpha = \frac{a_{Sensor} + a_{Rad}}{g} \leq -S_{2/V} \text{ ist, wird ein Zähler gestartet bzw.}$$

Zeitglied 27 ausgelöst, und wenn der Zählerstand einen bestimmten Wert erreicht hat bzw. wenn eine bestimmte Zeitdauer vergangen ist und der Eintritt in die HDC-Regelung noch nicht erfolgt ist, wird der Bremsdruck in der Betriebsbremse 17 wieder abgebaut.

Erreicht der HDC-Regler 15 seine Eintrittsschwelle, so kann er auch vor Ablauf der Wartezeit den Bremsdruck erhöhen.

Nach einem Ausführungsbeispiel des Verfahrens kann die Betriebsbremse 17 auch am ersten oder zweiten Auslösezeitpunkt mit einem variablen Bremsdruck bzw. kontinuierlich veränderlichen Bremsdruck, vorzugsweise in Abhängigkeit von der Fahrbahnneigung und/oder einem in die Betriebsbremse 17 eingesteuerten Bremsdruck und/oder vom Rollwiderstand, mit einem Bremsfluid vorbefüllt werden.

Alternativ kann bei Fahrzeugen mit Bremsanlagen die mit einem Drucksensor ausgestattet sind, ein Übernahmedruck nach Maßgabe der Fahrbahnneigung berechnet werden. Erreicht der Bremsdruck der Bremsanlage beim Lösen des Bremspedals diesen Übernahmedruck, werden die Trennventile geschlossen und der HDC-Regler übernimmt die Regelung.

In dem HDC-Regler 15 wird der in die Betriebsbremse einzusteuernde Bremsdruck über das zum Solldruck korrespondierende Volumen durch Berechnug in einem dem HDC-Regler 15 zugeordneten Druckmodell bestimmt. Die Differenz des berechneten Modellvolumens zu dem Sollvolumen ergibt die geforderte Volumenänderung. Der Solldruck wird dabei aus der zu ihm korrelierenden Regelabweichung der Beschleunigung $a_{Soll}$-$a_{Ist}$ ermittelt.

In der Gefällekompensation 14 werden zu den normalen Druckaufbauten in der Betriebsbremse 17 durch den HDC-Regler 15 Druckerhöhungen addiert. Dabei wird bei einem Vergleichsergebnis von

$$\sin\alpha = (a_{Sensor} - a_{Rad})/g \leq S_{3/V} \text{ (negativer Zahlenwert)}$$

oder

$$\sin\alpha = (a_{Sensor} + a_{Rad})/g \geq S_{3/R} \text{ (positiver Zahlenwert)}$$

mit $S_{3/V/R}$= erster Schwellenwert der Fahrbahnneigung bei <u>V</u>orwärts- oder <u>R</u>ückwärtsfahrt, $a_{Sensor}$= Längsbeschleunigung des Fahrzeugs bei $V_{Fahrzeug} \geq$1km/h, $a_{Rad}$ = Radbeschleunigung, $\sin\alpha$ = geschätzte Fahrbahnneigung (Sinus des Steigungswinkels$\alpha$), g = Erdbeschleunigung, zu dem vom der HDC-Regelung ermittelten Bremsdruck des Bremsfluids ein von der Fahrbahnneigung abhängiger Kompensationsbremsdruck addiert. Bei $\sin\alpha > 0$ erfolgt eine Fahrt bergauf in Fahrzeuglängsrichtung (relevant für eine Rückwärtsfahrt), bei $\sin\alpha < 0$ erfolgt eine Fahrt bergab in Fahrzeuglängsrichtung (relevant für eine Vorwärtsfahrt)

Der Kompensationsbremsdruck wird in Abhängigkeit von einem zur Kompensation des Hangabtriebs bestimmten Grenzbremsdruck zu dem HDC-Bremsdruck addiert, bis die Summe aus dem HDC-Bremsdruck und dem Kompensationsbremsdruck den zur Kompensation des Hangabtriebs bestimmten Grenzbremsdruck erreicht oder eine Abnahme der Istbeschleunigung des Fahrzeugs ermittelt wird. Der Grenzbremsdruck wird dabei nach Maßgabe der Fahrtrichtung nach den folgender Beziehungen ermittelt:

$$P_{compV} = \sin \alpha * K_{V/1} \ (K<0) \ \text{vorwarts}$$

oder

$$P_{compR} = \sin \alpha * K_{R/1} \ (K>0) \ \text{ruckwärts}$$

mit $P_{compV}$ = Grenzbremsdruck bei Vorwärtsfahrt, $P_{compR}$ = Grenzbremsdruck bei Rückwärtsfahrt, $\sin \alpha$ = Fahrbahnneigung, $K_{V/R/1}$ = Bremscruckkonstante. Der Wert der Bremsdruckkonstanten $K_{1/V/R}$, z.B. 100bar, wird erhöht, wenn ein vierter Schwellenwert der Fahrbahnneigung $S_{V/R/4}$, der eine bis zu dem Faktor 5 größere Fahrbahnneigung wiedergibt, überschritten ist.

Die Differenz zwischen dem aktuellen Bremsdruck des HDC-Reglers und dem von der Gefällekompensation 14 ermittelten Kompensationsbremsdruck wird in jeder Druckstufe anteilsmäßig durch Druckerhöhung kompensiert. Der Kompensationsbremsdruck wird nach der folgenden Beziehung ermittelt:

$$P_{addcomp} = K_2 * (P_{comp} - P_{sollold}),$$

mit $P_{addcomp}$ = Kompensationsbremsdruck, $K_2$ = Anteilsfaktor des Grenzbremsdrucks $P_{comp}$, $P_{sollold}$ = Bremsdruck vor der aktuellen Druckerhöhung $P_{soll}$.

Wesentlich für die Kompensationsbremsdruckberechnung ist dabei der Wert $P_{sollold}$ vor der aktuellen Druckerhöhung $P_{soll}$. Nach einem weiteren Ausführungsbeispiel wird die von dem HDC-Regler ermittelte Druckerhöhung mindestens verdoppelt $(2* (P_{soll}-P_{sollold})$.

Die Erhöhung des von der HDC-Regelung vor der aktuellen Druckerhöhung ermittelten Bremsdruckes $P_{sollold}$ um einen Kompensationsbremsdruck nach Maßgabe der Fahrbahnneigung erfolgt daher nach der folgenden Beziehung:

$$P_{addcomp} = MAX[(0; K_2 * (P_{comp} - P_{sollold}));2* (p_{soll}-P_{sollold})]$$

Bei starker Zunahme der Fahrbahnneigung nach den Beziehungen

$$d(\sin \alpha)/dt \geq S_{5R} \ (S>o) \ \text{bei Rückwärtsfahrt}$$

$$d(\sin \alpha)/dt \leq S_{5V} \ (S<o) \ \text{bei Vowärtsfahrt}$$

und einem Überschreiten der Sollgeschwindigkeit der HDC-Regelung nach der Beziehung $v_{Ist} \geq V_{Soll}-K_V$, mit $V_{Ist}$ = Istgeschwindigkeit, $V_{soll}$ = Sollgeschwindigkeit, $K_v$ = Geschwindigkeitskonstante, wird der Kompensationsbremsdruck $P_{addcomp}$ zu dem vom HDC-Regler ermittelten Bremsdruck addiert oder die Bremsdruckanforderung des HDC-Reglers 15 erhöht, z.B.doppelte Verstärkung des Beschleunigungsreglers. Abgeschaltet wird die Kompensation, sobald die Fahrzeugbeschleunigung negativ wird, d.h. die Istgeschwindigkeit sich wieder an die Sollgeschwindigkeit annähert.

**Patentansprüche**

1. Verfahren zum Unterstützen einer HDC-Regelung(HDC= Hill Descent Control) (15) während des Anfahrens und/ oder Fahrens eines Fahrzeugs bergabwärts, welche die Fahrzeuggeschwindigkeit bei einer Bergfahrt durch Beeinflussung der Betriebsbremse (17) konstant hält oder begrenzt und in Abhängigkeit von mindestens einer externen, das Fahrzeug antreibenden Größe die Regelung modifiziert **gekennzeichnet durch** die Schritte

Ermitteln einer fahrsituationsabhängigen Neigung als externe Größe (sin α) in Abhängigkeit von einer der Fahrsituationen Fahrzeugstillstand, Vorwärtsfahrt oder Rückwärtsfahrt,

Vergleichen der in Abhängigkeit von den externen Größen ermittelten Beschleunigungen (a) in Fahrzeuglängsrichtung und/oder deren Veränderung mit mindestens einem vorgegebenen Schwellenwert (6), und

Beeinflussen der Betriebsbremse (17) in Abhängigkeit von dem Vergleichsergebnis vor oder nach Eintritt in die HDC-Regelung (15).

2. Verfahren nach Anspruch 1, **dadurch gekennzeichnet, dass** die externe, das Fahrzeug antreibende Größe, mit mindestens einem Beschleunigungssensor erfasst wird, dass die Beschleunigung in Fahrzeuglängsrichtung und/oder deren Veränderung mit dem mindestens einen Schwellenwert verglichen wird, und dass die Betriebsbremse (17) in Abhängigkeit von dem Vergleichsergebnis und der Regelphase der HDC-Regelung (15) beeinflusst wird.

3. Verfahren nach Anspruch 1 oder 2, **dadurch gekennzeichnet, dass** als externe Größe(n) die Erdbeschleunigungskomponente in Fahrzeuglängsrichtung und/oder davon abgeleitete Größen, wie Fahrzeugneigung, Fahrbahnneigung bzw. Gefälle u.dgl., ermittelt wird.

4. Verfahren nach einem der Ansprüche 1 bis 3, **dadurch gekennzeichnet, dass** die Erdbeschleunigungskomponente in Fahrzeuglängsrichtung bei Fahrzeugstillstand bzw. nahezu Fahrzeugstillstand mit einem Längsbeschleunigungssensor $a_{Sensor}$ erfasst wird.

5. Verfahren nach einem der Ansprüche 1 bis 3, **dadurch gekennzeichnet, dass** die Erdbeschleunigungskomponente in Fahrzeuglängsrichtung beim Anfahren bzw. Fahren des Fahrzeugs aus den Signalen eines Längsbeschleunigungssensors und eines Radsensors ermittelt und nach einer vorzeichenrichtigen Summation der ermittelten Beschleunigungswerte von $a_{Sensor}$-$a_{Rad}$ oder $a_{Sensor}$+$a_{Rad}$ bestimmt wird.

6. Verfahren nach Anspruch 5, **dadurch gekennzeichnet, dass** die Radbeschleunigung aus dem von mindestens einem Radsensor sensierten Raddrehverhalten ermittelt wird.

7. Verfahren nach einem der Ansprüche 1 bis 6, **dadurch gekennzeichnet, dass** aus der Erdbeschleunigung in Fahrzeuglängsrichtung nach der Beziehung $\dfrac{a_{Sensor}}{g}$ oder $\dfrac{a_{Sensor} - a_{Rad}}{g}$ oder $\dfrac{a_{Sensor} + a_{Rad}}{g}$ die Fahrbahnneigung (sin α) geschätzt wird.

8. Verfahren nach einem der Ansprüche 1 bis 7, **dadurch gekennzeichnet, dass** das Anfahren bzw. Anrollen des Fahrzeugs in Fahrzeuglängsrichtung bis zu einer Fahrzeuggeschwindigkeit von maximal 3km/h oder bis zum Vorliegen von verwertbaren Signalen mindestens eines Radsensors aus den gefilterten und ungefilterten Signalen des Längsbeschleunigungssensors nach den Beziehungen

$$a_{SensorFilter} - a_{Sensor} \geq S_{aDifferenz/R} \ (\text{Rückwärtsfahrt},$$
$$a_{SensorFilter} > 0)$$

oder

$$a_{SensorFilter} - a_{Sensor} \leq S_{aDifferenz/V} \ (\text{Vorwärtsfahrt},$$
$$a_{SensorFilter} < 0)$$

mit $S_{aDifferenz/R/V}$ = Schwellenwert, $a_{SensorFilter}$ = tiefpassgefilterte Beschleunigung des Fahrzeugs, $a_{Sensor}$ = gemessene Beschleunigung des Fahrzeugs (Signal des Längsbeschleunigungssensors), ermittelt wird.

9. Verfahren nach einem der Ansprüche 1 bis 8, **dadurch gekennzeichnet, dass** bei einem ersten Auslösezeitpunkt, bei dem das Vergleichsergebnis

$$\sin\alpha \geq S_{1/R} \text{ oder } \sin\alpha \leq -S_{1/V}$$

mit $S_{1/R/V}$= erster fartrichtungsabhängiger Schwellenwert der Fahrbahnneigung, $\sin\alpha$ = geschätzte Fahrbahnneigung, und bei dem

$$a_{SensorFilter} - a_{Sensor} \geq S_{aDifferenz/R} \text{ (Rückwärtsfahrt,}$$
$$a_{SensorFilter} > 0) \text{ oder}$$

$$a_{SensorFilter} - a_{Sensor} \leq S_{aDifferenz/V} \text{ (Vorwärtsfahrt,}$$
$$a_{SensorFilter} < 0)$$

ist, die Betriebsbremse (17) mit einem Bremsfluid vorbefüllt wird oder ein in der Betriebsbremse vorhandenes Bremsfluid eingestellt oder modifiziert wird.

10. Verfahren nach Anspruch 9, **dadurch gekennzeichnet, dass** an dem Auslösezeitpunkt ein Zähler oder Zeitglied (23) gestartet wird, und wenn der Zählerstand einen bestimmten Wert erreicht hat oder eine vorbestimmte Zeit vergangen ist und der Eintritt in die HDC-Regelung (15) noch nicht erfolgt ist und/oder eine geringe Fahrzeuggeschwindigkeit, vorzugsweise eine Fahrzeuggeschwindigkeit $v_{Fahrzeug}$ zwischen 1km/h und 3km/h, noch nicht erreicht ist, ein Abbau des Bremsdrucks erfolgt.

11. Verfahren nach einem der Ansprüche 1 bis 9, **dadurch gekennzeichnet, dass** die Betriebsbremse (17) auf mindestens einen konstanten Bremsdruck, vorzugsweise zwischen 1 und 6 bar, mit dem Bremsfluid vorbefüllt oder ein in der Betriebsbremse (17) vorhandenes Bremsfluid auf den konstanten Bremsdruck eingestellt wird.

12. Verfahren nach Anspruch 11, **dadurch gekennzeichnet, dass** der Bremsdruck, mit dem die Betriebsbremse (17) vorbefüllt oder auf den die Betriebsbremse (17) eingestellt wird, in Abhängigkeit von einem Bremsenbetätigungssignal (22) variiert.

13. Verfahren nach einem der Ansprüche 1 bis 10, **dadurch gekennzeichnet, dass** die Betriebsbremse (17) mit einem variablen Bremsdruck, vorzugsweise in Abhängigkeit von der Fahrbahnneigung und/oder einem in die Betriebsbremse eingesteuerten Bremsdruck und/oder dem Rollwiderstand, mit einem Bremsfluid vorbefüllt oder ein in der Betriebsbremse (17) vorhandenes Bremsfluid, auf den variablen Bremsdruck eingestellt wird.

14. Verfahren nach einem der Ansprüche 1 bis 13, **dadurch gekennzeichnet, dass** bei einem zweiten Auslösezeitpunkt, bei dem das Vergleichsergebnis von

$$\sin\alpha = \frac{a_{Sensor} + a_{Rad}}{g} \leq -S_{2/V}$$

bei Vorwärtsfahrt mit $| S_{2/R/V} |$ = zweiter fartrichtungsabhängiger Schwellenwert der Fahrbahnneigung, $\sin\alpha$= geschätzte Fahrbahnneigung, ist, und bei dem eine geringe Fahrzeuggeschwindigkeit, vorzugsweise eine Fahrzeuggeschwindigkeit $V_{Fahrzeug}$ zwischen 1km/h und 3km/h, erreicht ist, in der Betriebsbremse (17) ein Bremsdruckaufbau auf mindestens einen Bremsdruckwert durchgeführt wird.

15. Verfahren nach Anspruch 14, **dadurch gekennzeichnet, dass** der Bremsdruckwert in Abhängigkeit von einem Bremsenbetätigungssignal (26) eingestellt wird.

**16.** Verfahren nach Anspruch 14 oder 15, **dadurch gekennzeichnet, dass** der Bremsdruckwert in Abhängigkeit von der Fahrbahnneigung eingestellt wird.

**17.** Verfahren nach Anspruch 14 oder 16, **dadurch gekennzeichnet, dass** der Bremsdruckwert in Abhängigkeit von der Fahrbahnneigung kontinuierlich verändert wird.

**18.** Verfahren nach einem der Ansprüche 14 bis 17, **dadurch gekennzeichnet, dass** an dem Auslösezeitpunkt ein Zähler oder ein Zeitglied (27) gestartet wird, und wenn der Zählerstand einen bestimmten Wert erreicht hat oder eine vorbestimmte Zeit vergangen ist und der Eintritt in die HDC-Regelung (15) noch nicht erfolgt ist, ein Abbau des Bremsdrucks erfolgt.

**19.** Verfahren nach einem der Ansprüche 14 bis 18, **dadurch gekennzeichnet, dass** bei einem Vergleichsergebnis von $\sin\alpha = (a_{Sensor} - a_{Rad}) / g \leq S_{3/V}$ (negativer Zahlenwert)
oder
$\sin\alpha = (a_{Snsor} + a_{Rad})/ g \geq S_{3/R}$ (positiver Zahlenwert) mit $S_{3/V/R}$= dritter Schwellenwert der Fahrbahnneigung bei Vorwärts- oder Rückwärtsfahrt, $a_{Sensor}$= Längsbeschleunigung des Fahrzeugs bei $V_{Fahrzeug} \geq 1$km/h, $a_{Rad}$ = Radbeschleunigung, $\sin\alpha$ = geschätzte Fahrbahnneigung (Sinus des Steigungswinkels $\alpha$), g = Erdbeschleunigung und beim Eintritt in die HDC-Regelung (15), zu dem vom der HDC-Regelung ermittelten Bremsdruck des Bremsfluids ein von der Fahrbahnneigung.abhängiger Kompensationsbremsdruck addiert wird.

**20.** Verfahren nach Anspruch 19, **dadurch gekennzeichnet, dass** der Kompensationsbremsdruck in Abhängigkeit von einem zur Kompensation des Hangabtriebs bestimmten Grenzbremsdruck zu dem HDC-Bremsdruck addiert wird, bis die Summe aus dem HDC-Bremsdruck und dem Kompensationsbremsdruck den zur Kompensation des Hangabtriebs bestimmten Grenzbremsdruck erreicht.

**21.** Verfahren nach Anspruch 19 oder 20, **dadurch gekennzeichnet, dass** der Kompensationsbremsdruck in Abhängigkeit von der Istbeschleunigung zu dem HDC-Bremsdruck addiert wird, bis eine Abnahme der Istbeschleunigung des Fahrzeugs ermittelt wird.

**22.** Verfahren nach einem der Ansprüche 19 bis 21, **dadurch gekennzeichnet, dass** der Grenzbremsdruck nach den folgenden Beziehungen ermittelt wird:

$$P_{compV} = \sin\alpha * K_{1/R}$$

oder

$$P_{compR} = \sin\alpha * K_{1/V}$$

mit $P_{compV}$ = Grenzbremsdruck bei Vorwärtsfahrt, $P_{compR}$ = Grenzbremsdruck bei Rückwärtsfahrt, $\sin\alpha$ = Fahrbahnneigung, $K_{1/R/V}$ = Bremsdruckkonstante.

**23.** Verfahren nach einem der Ansprüche 19 bis 22, **dadurch gekennzeichnet, dass** der Wert der Bremsdruckkonstanten $K_{1/R/V}$ erhöht wird, wenn ein vierter Schwellenwert

$$\sin\alpha \leq S_{4/V}$$

vorwärts

$$\sin\alpha \geq S_{4/R}$$

rückwarts

der Fahrbahnneigung erreicht oder überschritten wird

**24.** Verfahren nach einem der Ansprüche 19 bis 23, **dadurch gekennzeichnet, dass** der Wert der Schwellenwerte $S_{R/V}$ in Abhängigkeit von der Fahrtrichtung "VORWÄRTS" oder "RÜCKWÄRTS" bestimmt wird.

**25.** Verfahren nach einem der Ansprüche 19 bis 24, **dadurch gekennzeichnet, dass** der Kompensationsbremsdruck nach der folgenden Beziehung ermittelt wird:

$$P_{addcomp} = K_2 * (P_{comp} - P_{sollold}),$$

mit $P_{addcomp}$ = Kompensationsbremsdruck, $K_2$ = Anteilsfaktor des Grenzbremsdrucks $P_{comp}$, $P_{sollold}$ = HDC-Bremsdruck vor der aktuellen Druckerhöhung $P_{Soll}$.

**26.** Verfahren nach einem der Ansprüche 1 bis 25, **gekennzeichnet durch** die Anwendung bei einer Zunahme der Fahrbahnneigung

$$d(\sin\alpha)/dt \geq S_{5R} \quad (S>o)$$

bei Rückwärtsfahrt

$$d(\sin\alpha)/dt \leq S_{5V} \quad (S<o)$$

bei Vowärtsfahrt
und einem Überschreiten der Sollgeschwindigkeit der HDC-Regelung.

**27.** Vorrichtung (9)zum Unterstützen einer HDC-Regelung(HDC= Hill Decent Control)(15) während des Anfahrens und/oder Fahrens eines Fahrzeugs bergabwärts, welche die Fahrzeuggeschwindigkeit bei einer Bergfahrt durch Beeinflussung der Betriebsbremse (17) konstant hält oder begrenzt, **gekennzeichnet durch** eine Ermittlungseinheit (10) zum Ermitteln einer fahrsituations abhängigen Neigung als externe, das Fahrzeug antreibende Größe in Abhängigkeit von einer der Fahrsituationen Fahrzeugstillstand, Vorwärtsfahrt oder Rückwärtsfahrt
eine Vergleichseinheit (7) zum Vergleichen der antreibenden Größe und/oder deren Veränderung mit mindestens einem vorgegebenen Schwellenwert (6), und
eine Einheit (11, 5)zum Beeinflussen der Betriebsbremse (17) in Abhängigkeit von dem Vergleichsergebnis vor oder nach Eintritt in die HDC-Regelung (15).

**28.** Vorrichtung nach Anspruch 27, **dadurch gekennzeichnet, dass** die Ermittlungseinheit (10) für die antreibende Größe mindestens einen Längsbeschleunigungssensor und/oder Raddrehzahlsensoren aufweist, und aus den Sensorsignalen eine Erdbeschleunigungskomponente oder davon abgeleitete Größen, wie Fahrbahn- oder Fahrzeugneigung bzw. Gefälle u.dgl. bestimmt, dass die Vergleichseinheit (7) als Summationsglied ausgebildet ist, in dem ein Vergleich der antreibende Größe mit mindestens einem Schwellenwert (6) erfolgt, dass eine Ein- und Ausschaltlogik (11) vorgesehen ist, die in Abhängigkeit von dem Vergleichsergebnis die Beeinflussungsvorrichtung (5) für die Betriebsbremse (17)aktiv oder inaktiv schaltet, und dass die Beeinflussungsvorrichtung (5) mindestens eine Druckvorsteuerung () für den Druckauf- oder -abbau in der Betriebsbremse (17) steuert.

**29.** Vorrichtung nach Anspruch 27 oder 28, **dadurch gekennzeichnet, dass** die Beeinflussungsvorrichtung (5) eine Gefällekompensation (14) aufweist, die auf den vom HDC-Regler (15) in die Betriebsbremse (17) eingesteuerten Bremsdruck einen Kompensationsbremsdruck addiert.

**Claims**

1. Method for assisting an HDC (Hill Descent Control) system (15) during the starting and/or travel of a vehicle in downhill direction, which HDC system keeps the speed of the vehicle constant or limits it during downhill travel by influencing the service brake (17), and modifies the control process as a function of at least one external variable which drives the vehicle,
   **characterized by** the steps:

   determination of a travel-situation-dependent inclination as an external variable (sin $\alpha$) as a function of one of the travel situations of the stationary state of the vehicle, forwards travel or reverse travel,
   comparison of the accelerations (a) in the longitudinal direction of the vehicle which are determined as a function of the external variables and/or the change in said accelerations (a) with at least one predefined threshold value (6), and
   influencing of the service brake (17) as a function of the comparison result before or after the HDC control system (15) begins to operate.

2. Method according to Claim 1, **characterized in that** the external variable which drives the vehicle is sensed with at least one acceleration sensor, **in that** the acceleration in the longitudinal direction of the vehicle and/or the change in said acceleration is compared with the at least one threshold value, and
   **in that** the service brake (17) is influenced as a function of the comparison result and the control phase of the HDC control system (15).

3. Method according to Claim 1 or 2, **characterized in that** the acceleration component due to gravity in the longitudinal direction of the vehicle and/or variables derived therefrom such as inclination of the vehicle, inclination of the carriageway, negative gradient and the like, is/are derived as external variable/variables.

4. Method according to one of Claims 1 to 3, **characterized in that** the acceleration component due to gravity in the longitudinal direction of the vehicle is sensed with a longitudinal acceleration sensor $a_{Sensor}$ when the vehicle is in a stationary state or virtually stationary state.

5. Method according to one of Claims 1 to 3, **characterized in that** the acceleration component due to gravity in the longitudinal direction of the vehicle is acquired from the signals of a longitudinal acceleration sensor and of a wheel sensor when the vehicle is starting or travelling and is determined after summation, with the correct sign, of the acquired acceleration values from $a_{Sensor} - a_{Wheel}$ or $a_{Sensor} + a_{Wheel}$.

6. Method according to Claim 5, **characterized in that** the acceleration of the wheels is acquired from the rotational behaviour of the wheels which is sensed by at least one wheel sensor.

7. Method according to one of Claims 1 to 6, **characterized in that** the inclination of the carriageway (sin $\alpha$) is estimated from the acceleration due to gravity in the longitudinal direction of the vehicle according to the relationship $\dfrac{a_{Sensor}}{g}$ or $\dfrac{a_{Sensor} - a_{Wheel}}{g}$ or $\dfrac{a_{Sensor} + a_{Wheel}}{g}$.

8. Method according to one of Claims 1 to 7, **characterized in that** the starting or rolling of the vehicle in the longitudinal direction of the vehicle up to a vehicle speed of at maximum 3 km/h or until usable signals of at least one wheel sensor are present is determined from the filtered and unfiltered signals of the longitudinal acceleration sensor according to the relationships:

   $$a_{SensorFilter} - a_{Sensor} \geq S_{aDifference/R} \text{ (reverse travel,}$$

   $$a_{SensorFilter} > 0) \text{ or}$$

$$a_{\text{SensorFilter}} - a_{\text{Sensor}} \leq S_{\text{aDifference/F}} \quad \text{(forward travel,}$$

$$a_{\text{SensorFilter}} < 0)$$

where $S_{\text{aDifference/R/F}}$ = threshold value, $a_{\text{SensorFilter}}$ = low-pass-filtered acceleration of the vehicle, $a_{\text{Sensor}}$ = measured acceleration of the vehicle (signal of the longitudinal acceleration sensor).

9.  Method according to one of Claims 1 to 8,
    **characterized in that** at a first triggering time at which the comparison result

$$\sin \alpha \geq S_{1/R} \text{ or } \sin \alpha \leq -S_{1/F}$$

where $S_{1/R/F}$ = first travel-direction-dependent threshold value of the inclination of the carriageway, $\sin \alpha$ = estimated inclination of the carriageway, and in which

$$a_{\text{SensorFilter}} - a_{\text{Sensor}} \geq S_{\text{aDifference/R}} \quad \text{(reverse travel,}$$

$$a_{\text{SensorFilter}} > 0) \text{ or}$$

$$a_{\text{SensorFilter}} - a_{\text{Sensor}} \leq S_{\text{aDifference/F}} \quad \text{(forward travel,}$$

$$a_{\text{SensorFilter}} < 0) \text{ applies,}$$

the service brake (17) is pre-charged with a brake fluid or a brake fluid which is present in the service brake is set or modified.

10. Method according to Claim 9, **characterized in that** a counter or timing element (23) is started at the triggering time, and a reduction in the brake pressure takes place if the counter reading has reached a specific value or a predetermined time has passed and the HDC control system (15) has not yet begun to operate and/or a low vehicle speed, preferably a vehicle speed $V_{\text{Vehicle}}$ between 1 km/h and 3 km/h, has not yet been reached.

11. Method according to one of Claims 1 to 9, **characterized in that** the service brake (17) is pre-charged with the brake fluid to at least one constant brake pressure, preferably between 1 and 6 bar, or a brake fluid which is present in the service brake (17) is set to the constant brake pressure.

12. Method according to Claim 11, **characterized in that** the brake pressure with which the service brake (17) is pre-charged or to which the service brake (17) is set varies as a function of a brake activation signal (22).

13. Method according to one of Claims 1 to 10, **characterized in that** the service brake (17) is pre-charged with a brake fluid with a variable brake pressure, or a brake fluid which is present in the service brake (17) is set to the variable brake pressure, preferably as a function of the inclination of the carriageway and/or a brake pressure which is applied to the service brake, and/or as a function of the rolling resistance.

14. Method according to one of Claims 1 to 13, **characterized in that** a build up of brake pressure in the service brake (17) to at least one brake pressure value is carried out at a second triggering time at which the comparison result of

$$\sin \alpha = \frac{a_{\text{Sensor}} - a_{\text{Wheel}}}{g} \geq S_{2/R} \text{ in the case of reverse}$$

$$\text{travel}$$

$$\sin \alpha = \frac{a_{Sensor} - a_{Wheel}}{g} \leq S_{2/F} \text{ in the case of forward}$$

travel

where $|S_{2/R/F}|$ = second travel-direction-dependent threshold value of the inclination of the carriageway and $\sin \alpha$ = estimated inclination of the carriageway, and at which triggering time a low vehicle speed, preferably a vehicle speed $V_{Vehicle}$ between 1 km/h and 3 km/h is reached.

15. Method according to Claim 14, **characterized in that** the brake pressure value is set as a function of a brake activation signal (26).

16. Method according to Claim 14 or 15, **characterized in that** the brake pressure value is set as a function of the inclination of the carriageway.

17. Method according to Claim 14 or 16, **characterized in that** the brake pressure value is changed continuously as a function of the inclination of the carriageway.

18. Method according to one of Claims 14 to 17, **characterized in that** at the triggering time a counter or a timing element (27) is started, and a reduction of the brake pressure takes place if the counter reading has reached a specific value or a predetermined time has passed and the HDC control system (15) has not yet begun to operate.

19. Method according to one of Claims 14 to 18, **characterized in that** in the event of a comparison result of $\sin \alpha$ = $(a_{Sensor} - a_{Wheel}) / g \leq S_{3/F}$ (negative numerical value)
    or
    $\sin \alpha = (a_{Sensor} + a_{Wheel}) / g \geq S_{3/R}$ (positive numerical value) where $S_{3/F/R}$ = third threshold value of the inclination of the carriageway in the case of $\underline{F}$orward travel or $\underline{R}$everse travel, $a_{Sensor}$ = longitudinal acceleration of the vehicle when $V_{Vehicle} \geq 1$ km/h, $a_{Wheel}$ = wheel acceleration, $\sin \alpha$ = estimated inclination of the carriageway (sine of the positive gradient angle $\alpha$), g = acceleration due to gravity and when the HDC control system (15) begins to operate, a compensation brake pressure which is dependent on the inclination of the carriageway is added to the brake pressure of the brake fluid which is determined by the HDC control system.

20. Method according to Claim 19, **characterized in that** the compensation brake pressure is added to the HDC brake pressure as a function of a limiting brake pressure, which is intended to compensate for the downhill slope force, until the sum of the HDC brake pressure and the compensation brake pressure reaches the limiting brake pressure which is intended to compensate for the downhill slope force.

21. Method according to Claim 19 or 20, **characterized in that** the compensation brake pressure is added to the HDC brake pressure as a function of the actual acceleration until a decrease in the actual acceleration of the vehicle is determined.

22. Method according to one of Claims 19 to 21, **characterized in that** the limiting brake pressure is determined according to the following relationships:

$$P_{compF} = \sin \alpha * K_{1/R}$$

or

$$P_{compR} = \sin \alpha * K_{1/F}$$

where $P_{compF}$ = limiting brake pressure in the case of forward travel, $P_{compR}$ = limiting brake pressure in the case of reverse travel, $\sin \alpha$ = inclination of the carriageway, $K_{1/R/F}$ = brake pressure constant.

23. Method according to one of Claims 19 to 22,

**characterized in that** the value of the brake pressure constants $K_{1/R/F}$ is increased if a fourth threshold value

$$\sin \alpha \leq S_{4/F}$$

for forward travel

$$\sin \alpha \geq S_{4/R}$$

for reverse travel
of the inclination of the carriageway is reached or exceeded.

24. Method according to one of Claims 19 to 23, **characterized in that** the value of the threshold values $S_{R/F}$ is determined as a function of the direction of travel "FORWARDS" or "REVERSE".

25. Method according to one of Claims 19 to 24, **characterized in that** the compensation brake pressure is determined according to the following relationship:

$$P_{addcomp} = K_2 * (P_{comp} - P_{setpoint}),$$

, where $P_{addcomp}$ = compensation brake pressure, $K_2$ = proportionality factor of the limiting brake pressure, $P_{comp}$, $P_{setpoint}$ = HDC brake pressure before the current increase in pressure $P_{setp}$.

26. Method according to one of Claims 1 to 25,
**characterized by** application in the event of an increase in the inclination of the carriageway of

$$d(\sin \alpha) / dt \geq S_{5R} \ (S>o)$$

in the case of reverse travel

$$d(\sin \alpha) / dt \leq S_{5F} \ (S<o)$$

in the case of forward travel
and upward transgression of the setpoint speed of the HDC control system.

27. Device (9) for assisting an HDC (Hill Descent Control) system (15) during the starting and/or travel of a vehicle in a downhill direction, which HDC control system keeps the vehicle speed constant or limits it in the case of hill travel by influencing the service brake (17), **characterized by** a determining unit (10) for determining a travel-situation-dependent inclination as an external variable, which drives the vehicle, as a function of one of the travel situations: stationary state of the vehicle, forward travel or reverse travel
a comparatison unit (7) for comparing the driving variable and/or the change in said variable with at least one predefined threshold value (6), and
a unit (11, 5) for influencing the service brake (17) as a function of the comparison result before or after the HDC control system (15) begins to operate.

28. Device according to Claim 27, **characterized in that** the determining unit (10) for the driving variable has at least one longitudinal acceleration sensor and/or wheel speed sensors, and determines an acceleration component due to gravity or variables derived therefrom such as inclination of the carriageway or of the vehicle and/or the negative gradient and the like from the sensor signals, **in that** the comparison unit (7) is embodied as a summing element in which a comparison of the driving variable with at least one threshold value (6) is made, **in that** a switch-on and switch-off logic (11) is provided which activates or deactivates the influencing device (5) for the service brake (17) as a function of the comparison result, and **in that** the influencing device (5) controls at least one pressure pilot-controller () for the build up of pressure or the reduction of pressure in the service brake (17).

29. Device according to Claim 27 or 28, **characterized in that** the influencing device (5) has a negative gradient compensation means (14) which adds a compensation brake pressure to the brake pressure which is applied to the service brake (17) by the HDC control system (15).


**Revendications**

1. Procédé d'assistance d'une régulation HDC (HDC = Hill Descent Control - Limiteur de vitesse en descente) (15) pendant le démarrage et/ou le déplacement d'un véhicule dans une descente, laquelle maintient constante ou limite la vitesse du véhicule lors d'une descente en influençant le frein de service (17) et modifie la régulation en fonction d'au moins une grandeur externe qui entraîne le véhicule, **caractérisé par** les étapes suivantes :

   détermination d'une inclinaison dépendante de la situation de conduite en tant que grandeur externe (sin $\alpha$) en fonction de l'une des situations de conduite arrêt du véhicule, marche avant ou marche arrière,
   comparaison des accélérations (a) déterminées en fonction des grandeurs externes dans le sens longitudinal du véhicule et/ou de leur variation avec au moins une valeur de seuil (6) prédéfinie et
   influence du frein de service (17) en fonction du résultat de la comparaison avant ou après l'entrée en mode régulation HDC (15).

2. Procédé selon la revendication 1, **caractérisé en ce que** la grandeur externe qui entraîne le véhicule est acquise avec au moins un détecteur d'accélération, que l'accélération dans le sens longitudinal du véhicule et/ou sa variation est comparée avec l'au moins une valeur de seuil et que le frein de service (17) est influencé en fonction du résultat de la comparaison et de la phase de régulation de la régulation HDC (15).

3. Procédé selon la revendication 1 ou 2, **caractérisé en ce que** la ou les grandeurs externes déterminées sont les composantes d'accélération de la Terre dans le sens longitudinal du véhicule et/ou des grandeurs dérivées de celles-ci telles que l'inclinaison du véhicule, l'inclinaison de la chaussée ou les pentes et similaires.

4. Procédé selon l'une des revendications 1 à 3, **caractérisé en ce que** les composantes d'accélération de la Terre dans le sens longitudinal du véhicule sont acquises à l'arrêt du véhicule ou au quasi-arrêt du véhicule avec un détecteur d'accélération longitudinal $a_{sensor}$.

5. Procédé selon l'une des revendications 1 à 3, **caractérisé en ce que** les composantes d'accélération de la Terre dans le sens longitudinal du véhicule sont déterminées lors du démarrage ou du déplacement du véhicule à partir des signaux d'un détecteur d'accélération longitudinal et d'un capteur de roue et sont définie d'après une addition respectueuse du signe des valeurs d'accélération déterminées $a_{sensor} - a_{rad}$ ou $a_{sensor} + a_{rad}$.

6. Procédé selon la revendication 5, **caractérisé en ce que** l'accélération de roue est estimée à partir du comportement de rotation de la roue détecté par au moins un capteur de roue.

7. Procédé selon l'une des revendications 1 à 6, **caractérisé en ce que** l'inclinaison de la chaussée (sin $\alpha$) est estimée à partir de l'accélération de la Terre dans le sens longitudinal du véhicule d'après la relation $\dfrac{a_{sensor}}{g}$ ou

$$\dfrac{a_{sensor} - a_{Rad}}{g} \quad \text{ou} \quad \dfrac{a_{sensor} + a_{Rad}}{g} \quad .$$

8. Procédé selon l'une des revendications 1 à 7, **caractérisé en ce que** le démarrage ou le début du roulage du véhicule dans le sens longitudinal du véhicule jusqu'à une vitesse maximale du véhicule de 3 km/h ou jusqu'à la présence de signaux interprétables d'au moins un capteur de roue est déterminé d'après les signaux filtrés et non filtrés du détecteur d'accélération longitudinal d'après les relations

$$a_{SensorFilter} - a_{Sensor} \geq S_{aDifferenz/R} \quad (\text{marche arrière,}$$
$$a_{SensorFilter} > 0)$$

ou

$$a_{SensorFilter} - a_{Sensor} \leq S_{aDifferenz/V} \quad (\text{marche avant,} \ a_{SensorFilter} < 0)$$

avec $S_{aDifferenz/R/V}$ = Valeur de seuil, $a_{SensorFilter}$ = accélération du véhicule après filtrage passe-bas (signal du détecteur d'accélération longitudinal).

9. Procédé selon l'une des revendications 1 à 8, **caractérisé en ce qu'**à un premier point de déclenchement auquel le résultat de la comparaison

$$\sin \alpha \geq s_{1/R} \ \text{ou} \ \sin \alpha \leq -s_{1/V}$$

avec $s_{1/R/V}$ = première valeur de seuil de l'inclinaison de la chaussée dépendante du sens de déplacement, $\sin \alpha$ = inclinaison estimée de la chaussée et auquel

$$a_{SensorFilter} - a_{Sensor} \geq S_{aDifferenz/R} \quad (\text{marche arrière,}$$
$$a_{SensorFilter} > 0) \ \text{ou}$$

$$a_{SensorFilter} - a_{Sensor} \leq S_{aDifferenz/V} \quad (\text{marche avant,} \ a_{SensorFilter} < 0),$$

le frein de service (17) est rempli à l'avance d'un fluide de frein ou alors un fluide de frein présent dans le frein de service est réglé ou modifié.

10. Procédé selon la revendication 9, **caractérisé en ce qu'**à l'instant du déclenchement est démarré un compteur ou un temporisateur (23) et lorsque le compteur a atteint une valeur donnée ou lorsqu'une durée prédéfinie s'est écoulée et que l'entrée en mode régulation HDC (15) n'a pas encore eu lieu et/ou une faible vitesse du véhicule, de préférence une vitesse du véhicule $V_{Fahrzeug}$ comprise entre 1 km/h et 3 km/h n'est pas encore atteinte, il se produit un relâchement de la pression de freinage.

11. Procédé selon l'une des revendications 1 à 9, **caractérisé en ce que** le frein de service (17) est rempli à l'avance avec le fluide de frein à au moins une pression de freinage constante, de préférence comprise entre 1 et 6 bar, ou alors un fluide de frein présent dans le frein de service (17) est réglé à la pression de freinage constante.

12. Procédé selon la revendication 11, **caractérisé en ce que** la pression de freinage à laquelle est rempli à l'avance le frein de service (17) ou à laquelle est réglé le frein de service (17) varie en fonction d'un signal d'actionnement du frein (22).

13. Procédé selon l'une des revendications 1 à 10, **caractérisé en ce que** le frein de service (17) est rempli à l'avance d'un fluide de frein avec une pression de freinage variable, de préférence en fonction de l'inclinaison de la chaussée et/ou d'une pression de freinage commandée dans le frein de service et/ou de la résistance au roulage, ou alors un fluide de frein présent dans le frein de service (17) est réglé à la pression de freinage variable.

**14.** Procédé selon l'une des revendications 1 à 13, **caractérisé en ce qu'**à un deuxième instant de déclenchement, auquel le résultat de la comparaison de

$$\sin \alpha = \frac{a_{sensor} - a_{Rad}}{g} \geq S_{2/R}$$

en marche arrière

$$\sin \alpha = \frac{a_{sensor} + a_{Rad}}{g} \leq -S_{2/V}$$

en marche avant avec $|S_{2/R/V}|$ = deuxième valeur de seuil de l'inclinaison de la chaussée dépendante du sens du déplacement, sin $\alpha$ = inclinaison estimée de la chaussée et auquel une faible vitesse du véhicule, de préférence une vitesse du véhicule $V_{Fahrzeug}$ comprise entre 1 km/h et 3 km/h est atteinte, un établissement de la pression de freinage à au moins une valeur de pression de freinage est effectuée dans le frein de service (17).

**15.** Procédé selon la revendication 14, **caractérisé en ce que** la valeur de la pression de freinage est réglée en fonction d'un signal d'actionnement du frein (26).

**16.** Procédé selon la revendication 14 ou 15, **caractérisé en ce que** la valeur de la pression de freinage est réglée en fonction de l'inclinaison de la chaussée.

**17.** Procédé selon la revendication 14 ou 16, **caractérisé en ce que** la valeur de la pression de freinage est modifiée continuellement en fonction de l'inclinaison de la chaussée.

**18.** Procédé selon l'une des revendications 14 à 17, **caractérisé en ce qu'**à l'instant du déclenchement est démarré un compteur ou un temporisateur (27) et lorsque le compteur a atteint une valeur donnée ou lorsqu'une durée prédéfinie s'est écoulée et que l'entrée en mode régulation HDC (15) n'a pas encore eu lieu, il se produit un relâchement de la pression de freinage.

**19.** Procédé selon l'une des revendications 14 à 18, **caractérisé en ce que** lorsque le résultat de la comparaison de

$$\sin \alpha = (a_{Sensor} - a_{Rad}) / g \leq s_{3/V} \text{ (valeur négative du compteur)}$$

ou

$$\sin \alpha = (a_{Sensor} + a_{Rad}) / g \geq s_{3/R} \text{ (valeur positive du compteur)}$$

avec $s_{3/R/V}$ = troisième valeur de seuil de l'inclinaison de la chaussée en marche avant ou en marche arrière, $a_{Sensor}$ = accélération longitudinale du véhicule avec $V_{Fahrzeug} \geq 1$ km/h, $a_{Rad}$ = vitesse de roue, sin $\alpha$ = inclinaison estimée de la chaussée (sinus de l'angle d'inclinaison $\alpha$), g = accélération de la Terre et lors de l'entrée en mode régulation HDC (15), une pression de freinage de compensation qui dépend de l'inclinaison de la chaussée est additionnée à la pression de freinage du fluide de frein déterminée par la régulation HDC.

**20.** Procédé selon la revendication 19, **caractérisé en ce que** la pression de freinage de compensation est additionnée à la pression de freinage HDC en fonction d'une pression de freinage limite déterminée pour compenser la force descensionnelle de la pente jusqu'à ce que la somme de la pression de freinage HDC et de la pression de freinage de compensation atteigne la pression de freinage limite destinée à la compensation de la force descensionnelle de la pente.

**21.** Procédé selon la revendication 19 ou 20, **caractérisé en ce que** la pression de freinage de compensation est additionnée à la pression de freinage HDC en fonction de l'accélération réelle jusqu'à ce qu'une diminution de l'accélération réelle du véhicule soit constatée.

**22.** Procédé selon l'une des revendications 19 à 21, **caractérisé en ce que** la pression de freinage limite est déterminée d'après les relations ci-après :

$$P_{compV} = \sin \alpha * K_{1/R}$$

ou

$$P_{compR} = \sin \alpha * K_{1/V}$$

avec $P_{compV}$ = pression de freinage limite en marche avant, $P_{compR}$ = pression de freinage limite en marche arrière, $\sin \alpha$ = inclinaison de la chaussée, $K_{1/R/V}$ = constante de pression de freinage.

**23.** Procédé selon l'une des revendications 19 à 22, **caractérisé en ce que** la valeur de la constante de pression de freinage $K_{1/R/V}$ est augmentée lorsqu'une quatrième valeur de seuil

$$\sin \alpha \leq s_{4/V} \text{ en marche avant}$$

$$\sin \alpha \geq s_{4/R} \text{ en marche arrière}$$

de l'inclinaison de la chaussée est atteinte ou dépassée.

**24.** Procédé selon l'une des revendications 19 à 23, **caractérisé en ce que** la valeur des valeurs de seuil $S_{R/V}$ est déterminée en fonction du sens du déplacement « EN MARCHE AVANT » ou « EN MARCHE ARRIÈRE ».

**25.** Procédé selon l'une des revendications 19 à 24, **caractérisé en ce que** la pression de freinage de compensation est déterminée d'après la relation suivante :

$$P_{addcomp} = K_2 * (P_{comp} - P_{sollold}),$$

avec $P_{addcomp}$ = pression de freinage de compensation, $K_2$ = facteur proportionnel de la pression de freinage limite $P_{comp}$, $P_{sollold}$ = pression de freinage HDC avant l'augmentation courante de la pression $P_{soll}$.

**26.** Procédé selon l'une des revendications 1 à 25, **caractérisé par** l'utilisation de la régulation HDC en cas d'augmentation de l'inclinaison de la chaussée

$$d(\sin \alpha) / dt \geq s_{5R} \ (S > 0)$$

en marche arrière

$$d(\sin \alpha) / dt \leq s_{5V} (S < 0)$$

en marche avant
et un dépassement de la vitesse de consigne.

27. Dispositif (9) pour assister une régulation HDC (HDC = Hill Descent Control - Limiteur de vitesse en descente) (15) pendant le démarrage et/ou le déplacement d'un véhicule dans une descente, laquelle maintient constante ou limite la vitesse du véhicule lors d'une descente en influençant le frein de service (17), **caractérisé par**
une unité de détermination (10) destinée à déterminer une inclinaison dépendante de la situation de conduite en tant que grandeur externe qui entraîne le véhicule en fonction de l'une des situations de conduite arrêt du véhicule, marche avant ou marche arrière,
une unité de comparaison (7) destinée à comparer la grandeur d'entraînement et/ou sa variation avec au moins une valeur de seuil (6) prédéfinie et
une unité (11, 5) destinée à influencer le frein de service (17) en fonction du résultat de la comparaison avant ou après l'entrée en mode régulation HDC (15).

28. Dispositif selon la revendication 27, **caractérisé en ce que** l'unité de détermination (10) pour la grandeur d'entraînement présente au moins un détecteur d'accélération longitudinal et/ou des capteurs de vitesse de rotation de roue et détermine à partir des signaux des capteurs une composante d'accélération de la Terre ou des grandeurs qui en sont dérivées telles que l'inclinaison du véhicule, l'inclinaison de la chaussée ou les pentes et similaires, que l'unité de comparaison (7) est réalisée sous la forme d'un additionneur dans lequel a lieu une comparaison entre la grandeur d'entraînement et au moins une valeur de seuil (6), qu'il est prévu un circuit logique d'activation et de désactivation (11) qui active ou désactive le dispositif d'influence (5) du frein de service (17) en fonction du résultat de la comparaison et que le dispositif d'influence (5) commande au moins une précommande de pression () pour l'établissement ou la diminution de la pression dans le frein de service (17).

29. Dispositif selon la revendication 27 ou 28, **caractérisé en ce que** le dispositif d'influence (5) présente une compensation de la pente (14) qui additionne une pression de freinage de compensation à la pression de freinage commandée par le régulateur HDC (15) dans le frein de service (17).

Fig. 1

EP 1 212 222 B1

**Fig. 2**

Längs-beschleunigung

FZG-Geschwindigkeit

**Gefälle-berechnung** 10

**Anfahrhilfe HDC**

Bremsbetätigungserkennung — 12

**Ein / Ausschalt-logik** 11

Gefälle

Aktivierung

5

**Druckvor-steuerung** 13

Bremsdruck

Gang

**Gefälle-kompensation** 14

Druck-Sollwert

15 **normaler HDC - Regler**

Druck-Sollwert

+ 16 +

17

EP 1 212 222 B1

EP 1 212 222 B1

**Fig. 3**

Druckvorsteuerung

Längsbeschleunigung

18

Tiefpaß-
Filter

19

Logikglied
1. Stufe

20

Bremspedalbetätigung

22

Zeitgeber

23

21

Druck einstellen

$p$

$t$

Druck-Sollwert

Maximum

Druck-
Sollwert

Aktivierung

FZG-Geschwindigkeit

24

Auflösung
2. Stufe

Pedalbetätigung

26

Zeitgeber

27

Druck einstellen

$p$

$t$

Druck-Sollwert

25

**Fig. 4**

$F_T$

$r_R$

$a_{Sensor}$

$\alpha$

$F_N$

$\alpha$

$F_G$

$M_H$   $M_B$   $M_S$

**EP 1 212 222 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9611826 A1
- WO 9611862 A